# FASCICULE DE BREVET EUROPEEN

(11) **EP 2 666 061 B1**
(45) Date de publication et mention de la délivrance du brevet: **03.06.2020**
(21) Numéro de dépôt: 11782413.6
(22) Date de dépôt: 09.11.2011
(51) Int. Cl.: G04G 17/04, G04G 17/06

(54) **MONTRE COMPRENANT UN CONNECTEUR ZEBRA POUR LA CONNEXION ELECTRIQUE ENTRE UN DISPOSITIF D'AFFICHAGE NUMERIQUE ET UNE CARTE DE CIRCUIT IMPRIME ET PROCEDE D'ASSEMBLAGE D'UNE TELLE MONTRE**
UHR MIT EINEM ZEBRASTECKER FÜR DIE ELEKTRISCHE VERBINDUNG ZWISCHEN EINER DIGITALEN ANZEIGEVORRICHTUNG UND EINER LEITERPLATTE SOWIE VERFAHREN ZUR MONTAGE EINER SOLCHEN UHR
WATCH COMPRISING A ZEBRA CONNECTOR FOR ELECTRICAL CONNECTION BETWEEN A DIGITAL DISPLAY DEVICE AND A PRINTED CIRCUIT BOARD AND METHOD OF ASSEMBLING SUCH A WATCH

(30) Priorité: 18.01.2011 EP 11151273
(43) Date de publication de la demande: 27.11.2013
(73) Titulaire: ETA SA Manufacture Horlogère Suisse, 2540 Grenchen (CH)
(72) Inventeur: KALTENRIEDER, André, 2515 Prêles (CH); JUFER, Martin, 4917 Melchnau (CH); RACINE, Christian, 2735 Malleray-Bévilard (CH); BOVET, Jean-Luc, 4500 Solothurn (CH); GROSJEAN, Jérôme, 2534 Orvin (CH)
(74) Mandataire: Supper, Marc
(86) Numéro de dépôt international: PCT/EP2011/069745
(87) Numéro de publication internationale: WO 2012/097892

(56) Documents cités:
- EP-A1- 0 460 526
- EP-A1- 1 122 620
- JP-U- H0 393 793
- US-A- 4 281 406

## Description

La présente invention concerne un procédé de soudage par ultrasons d'une glace sur la carrure d'une montre. Plus précisément, la présente invention concerne un tel procédé de soudage qui garantit un bon contact électrique entre un dispositif d'affichage fixé sur la face intérieure de la glace et une carte de circuit imprimé disposée à distance sous le dispositif d'affichage.

Dans le domaine de la fabrication industrielle, on cherche toujours, autant par souci d'économie que par volonté d'atteindre la plus grande fiabilité possible, à automatiser le plus possible les différentes étapes de fabrication d'un produit. La fabrication en grande série de montres n'échappe pas à cette règle. Dans ce domaine, la qualité de la fixation des différents composants et la fiabilité des connexions électriques sont déterminantes. En effet, de la qualité de la fixation des composants dépend notamment l'étanchéité de la montre. Par ailleurs, des connexions électriques fiables sont gages d'un bon fonctionnement de la montre dans le temps.

La présente invention s'intéresse à une montre de type électronique à affichage digital de l'heure. Cette montre comprend notamment, collé sur la face intérieure de la glace, un dispositif d'affichage numérique tel qu'une cellule d'affichage à cristal liquide relié au moyen d'un connecteur de type zébra à une carte de circuit imprimé sur laquelle sont montés les différents composants électroniques de commande de la montre. Cette carte de circuit imprimé est logée dans la boîte de la montre, sous le dispositif d'affichage numérique et à distance de celui-ci.

Les problèmes rencontrés lors de la fabrication des premiers prototypes de cette montre ont été de deux types. On s'est tout d'abord rendu compte que le contact électrique entre le dispositif d'affichage et la carte de circuit imprimé n'était pas toujours fiable. On s'est par ailleurs interrogé sur la meilleure manière de fixer la glace sur la carrure de la montre afin de garantir l'étanchéité de cette dernière.

Le document US 4,281,406 A divulgue une montre dans laquelle la glace appartient à une structure monobloc qui comprend une couverture de panneau et un élément de couplage qui sont rendus solidaires les uns des autres par exemple par collage ou par montage à force. Cet ensemble est ensuite monté de manière amovible sur la carrure au moyen de vis de serrage qui exercent sur l'élément de couplage une force de traction. Un panneau d'affichage numérique est collé sur le milieu de la face arrière de la glace.

Le document EP 1 122 620 A1 divulgue une glace de montre faite en matière plastique sous la surface de laquelle sont ménagés des capteurs capacitifs. La glace de montre est fixée de manière permanente sur une lunette par exemple au moyen d'ultrasons.

Le document JP H03 93793 U se rapporte au soudage d'une glace de montre ordinaire par ultrasons qui n'est équipée d'aucun dispositif électronique. Ce document enseigne que lorsque l'on soude par ultrasons une glace de montre sur une portée d'une carrure en plastique, cette portée fond et est consommée en partie.

La présente invention a pour but de résoudre ces problèmes en proposant d'améliorer la fiabilité de la connexion électrique entre le dispositif d'affichage numérique et la carte de circuit imprimé. Dans le même temps, on a cherché à fixer la glace de la montre au moyen d'un soudage par ultrasons. En effet, il est connu que le soudage par ultrasons permet de solidariser la glace sur la carrure de la montre de manière parfaitement étanche et fiable dans le temps.

Ces objectifs sont atteints grâce à la présente invention qui divulgue une montre selon la revendication 1.

Selon un autre aspect, la présente invention enseigne un procédé de soudage par ultrasons d'une glace de montre conformément à la revendication 2.

Selon une première variante de réalisation de l'invention, avant l'étape de soudage par ultrasons, le connecteur zébra est à l'état détendu.

Selon une deuxième variante de réalisation de l'invention, après l'étape de soudage par ultrasons, le connecteur zébra est à l'état comprimé.

Grâce à ces caractéristiques, la présente invention procure une pièce d'horlogerie dont le niveau de la glace par rapport à une carte de circuit imprimé disposée dans la boîte de montre est tel que lorsqu'on solidarise la glace sur la carrure de la montre, un connecteur zébra va assurer la connexion électrique avec un taux de compression optimum entre la carte de circuit imprimé et un dispositif d'affichage numérique fixé sous la glace. Il est ainsi possible, en une seule étape, de garantir à la fois la fixation de la glace sur la carrure, l'étanchéité du système et une connexion électrique fiable entre le dispositif d'affichage et la carte de circuit imprimé qui porte les composants électroniques nécessaires au bon fonctionnement du dispositif d'affichage.

Le soudage par ultrasons se fait au moyen d'une sonotrode. Quand on applique cette sonotrode contre la glace de la montre, la glace vient en appui contre la portée de la carrure qui sert de directeur d'énergie et le connecteur zébra se trouve précontraint. Le connecteur zébra sera encore davantage contraint lorsqu'on soude la glace sur la carrure. En effet, sous l'effet de l'apport d'énergie vibratoire, la portée fond et le niveau de la glace s'abaisse en direction de la plaque à circuit imprimé.

La présente invention divulgue également un procédé de soudage par ultrasons qui permet simultanément la fixation de la glace sur la carrure de la montre et une connexion électrique fiable entre le dispositif d'affichage numérique et la carte de circuit imprimé sur laquelle sont montés les composants électroniques nécessaires au bon fonctionnement du dispositif d'affichage. On sait en effet que le soudage par ultrasons permet de solidariser la glace sur la carrure de la montre de manière parfaitement étanche et durable. Par ailleurs, lors du soudage par ultrasons, au moins une partie de la portée de la carrure sur laquelle la glace est en appui fond, ce qui provoque un abaissement du niveau du dispositif d'affichage par rapport à la carte de circuit imprimé. Comme l'écart entre le dispositif d'affichage et la carte de circuit imprimé se réduit, le dispositif d'affichage impose une compression optimale au connecteur zébra, ce qui permet au connecteur zébra d'assurer une connexion électrique fiable entre le dispositif d'affichage et la carte de circuit imprimé.

D'autres caractéristiques et avantages de la présente invention ressortiront plus clairement de la description détaillée qui suit d'un mode de mise en oeuvre du procédé selon l'invention, cet exemple étant donné à titre purement illustratif et non limitatif seulement en liaison avec le dessin annexé sur lequel:
- la figure 1 est une vue partielle en coupe d'une boîte de montre pour la mise en oeuvre du procédé selon l'invention avant l'étape de soudage par ultrasons;
- la figure 2 est une vue identique à celle de la figure 1 après l'étape de soudage par ultrasons, et
- la figure 3 est une vue partielle en coupe d'une boîte de montre selon un deuxième aspect qui ne fait pas partie de l'invention.

La présente invention procède de l'idée générale inventive consistant à procurer une pièce d'horlogerie dont la glace est fixée à un niveau tel qu'au cours d'une seule étape de fabrication, il est a la fois possible de solidariser la lunette sur la carrure et d'assurer une connexion électrique fiable des composants électroniques.

Dans un mode de réalisation particulièrement avantageux de l'invention, il est prévu de souder par ultrasons la glace sur la carrure de la montre, cette glace comportant sur sa face inférieure un dispositif d'affichage de type numérique connecté via un connecteur de type zébra à une carte de circuit imprimé sur laquelle sont montés au moins les composants électroniques nécessaires au fonctionnement du dispositif d'affichage. En procédant de la sorte, le bénéfice est double: d'une part, le soudage par ultrasons permet de solidariser la lunette sur la carrure de la montre de manière parfaitement étanche et durable et, d'autre part, la connexion électrique entre le dispositif d'affichage numérique et la carte de circuit imprimé est fiable. En effet, sous l'effet de l'élévation de température induite par le soudage par ultrasons, une partie de la carrure encore appelée portée qui sert de directeur d'énergie est consommée, ce qui provoque un abaissement du niveau de la glace et donc du dispositif d'affichage par rapport à la carte de circuit imprimé correspondant au taux de compression souhaité du connecteur zébra. Le dispositif d'affichage se rapprochant de la carte à circuit imprimé, le connecteur zébra se retrouve comprimé conformément aux consignes du fournisseur et assure ainsi une parfaite connexion électrique.

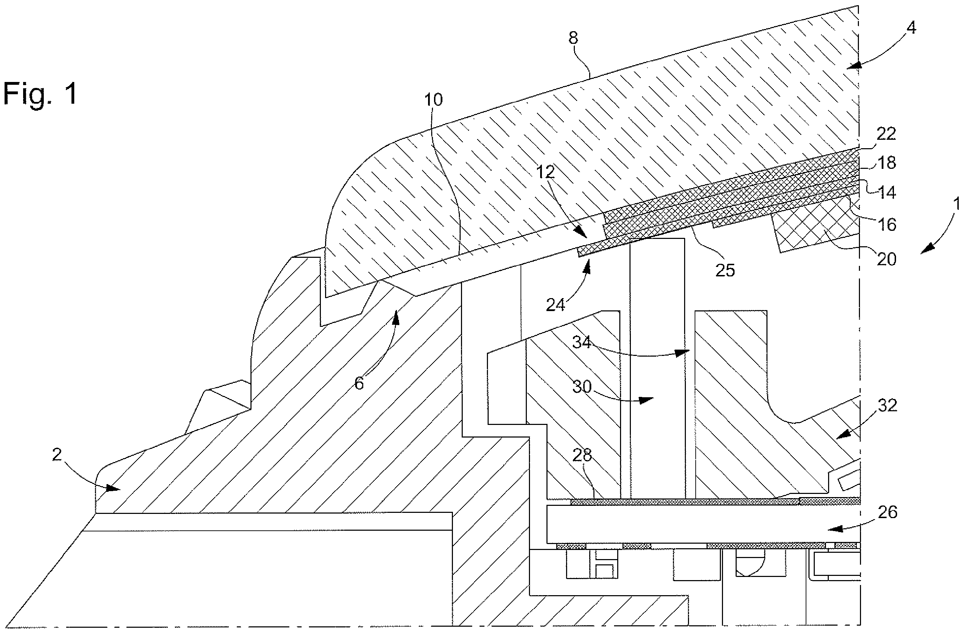

La figure 1 est une vue partielle en coupe d'une boîte de montre pour la mise en œuvre du procédé selon l'invention avant l'étape de soudage par ultrasons. Désignée dans son ensemble par la référence numérique générale 1, cette boîte de montre est délimitée par une carrure 2 et une glace de montre 4. La carrure 2 et la glace de montre 4 sont réalisées en des matériaux aptes à être soudés par ultrasons. La glace 4 est en appui sur une portée 6 de la carrure 2. Comme on le verra en détail ci-après, la portée 6 sert de directeur d'énergie et permet d'amorcer la fusion des matériaux plastiques de ces deux composants en contact dès le déclenchement du faisceau d'ultrasons utilisé pour solidariser la glace de montre 4 sur la carrure 2.

La glace de montre 4 comprend deux faces, à savoir une face supérieure 8 dirigée du côté de l'utilisateur de la montre et une face inférieure 10 dirigée du côté de la boîte de montre 1. Un dispositif d'affichage numérique est fixé sur la face inférieure 10 de la glace. A titre d'exemple non limitatif seulement, ce dispositif d'affichage numérique peut être une cellule d'affichage à cristal liquide 12 en plastique souple comprenant un substrat avant 14 et un substrat arrière 16 s'étendant parallèlement et à distance l'un de l'autre et réunis entre eux par un cadre de scellement (non visible au dessin) qui délimite un volume étanche pour le confinement du cristal liquide. Les deux substrats avant 14 et arrière 16 sont disposés entre un premier et un second polariseurs, respectivement 18 et 20, dont les directions de polarisation sont croisées. L'ensemble formé par les deux substrats 14 et 16 et les deux polariseurs 18 et 20 est collé au moyen d'une couche de colle optique 22 sur la face inférieure 10 de la glace de montre 4.

On voit à l'examen de la figure 1 que les dimensions du substrat avant 14 excèdent celles du substrat arrière 16. Ceci permet de ménager une surface de contact 24 sur laquelle débouchent des pistes conductrices 25 pour la connexion électrique des électrodes de commande de la cellule d'affichage 12 avec les composants électroniques (non représentés) de commande de la cellule 12. Ces composants électroniques de commande sont montés sur une carte de circuit imprimé 26 disposée dans la boîte de montre 1, sous la cellule d'affichage 12 et à distance de celle-ci. Conformément à l'invention, les pistes conductrices 25 pour la connexion électrique des électrodes de commande de la cellule d'affichage à cristal liquide 12 sont reliées à des pistes conductrices correspondantes 28 structurées à la surface de la carte de circuit imprimé 26 au moyen d'un connecteur élastomère 30 qui s'étend sensiblement verticalement. On rappelle qu'un connecteur élastomère, également connu sous sa dénomination commerciale de connecteur zébra, est un connecteur souple formé d'une pluralité de feuilles conductrices séparées les unes des autres par des feuilles isolantes en élastomère. Le montage est complété par un guide de lumière 32 qui prend appui sur la carte de circuit imprimé 26 et qui sert à l'éclairage par l'arrière ou rétro-éclairage de la cellule d'affichage à cristal liquide 12. On notera que le guide de lumière 32 comprend une fente 34 pour le guidage et le maintien vertical du connecteur zébra 30.

Tel que représenté à la figure 1, le connecteur zébra 30 est à l'état détendu avant soudage par ultrasons de la glace de montre 4 sur la carrure 2. On notera qu'au sens de la présente invention, on entend par "comprimé" le fait que le connecteur zébra présente une hauteur qui est inférieure à celle qui est la sienne lorsqu'aucune contrainte ne s'exerce sur lui.

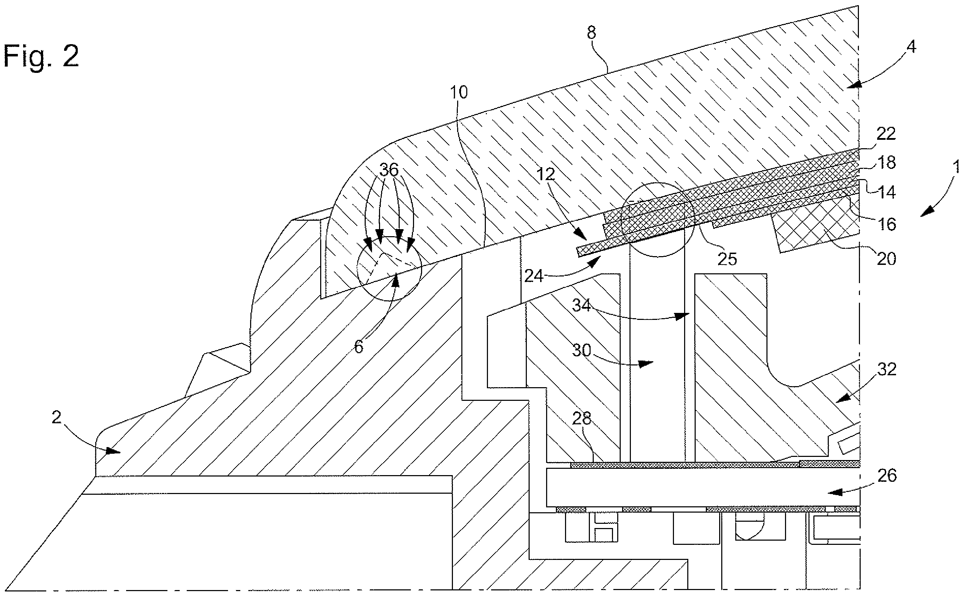

Comme déjà mentionné ci-dessus, la glace de montre 4 est en appui sur une portée 6 de la carrure 2 (voir figure 2). Cette portée 6 sert de directeur d'énergie à l'énergie vibratoire utilisée pour souder la glace de montre 4 sur la carrure 2. A cet effet, et conformément au procédé selon l'invention, on dirige en 36 les ultrasons sur la portée 6 pour faire fondre cette portée 6 et abaisser le niveau de la glace 4 en direction de la carte de circuit imprimé 26, de sorte que le connecteur zébra 30 se retrouve comprimé entre la cellule d'affichage à cristal liquide 12 et la carte de circuit imprimé 26. La fraction de la portée 6 qui est consommée lors du soudage et la diminution de hauteur du connecteur zébra 30 résultant de la compression de ce dernier sont représentées en pointillés dans des zones entourées d'un cercle sur la figure 2. A titre d'exemple, le taux de compression du connecteur zébra 30 après soudage est de l'ordre de 15%.

Ainsi, grâce au procédé selon l'invention, on soude la glace de montre 4 sur la carrure 2 au moyen d'ultrasons, ce qui garantit un soudage durable et parfaitement étanche et, simultanément, on comprime le connecteur zébra 30, ce qui garantit une connexion électrique fiable entre la cellule d'affichage à cristal liquide 12 et les composants électroniques de commande de cette cellule 12 montés sur la carte de circuit imprimé 26.

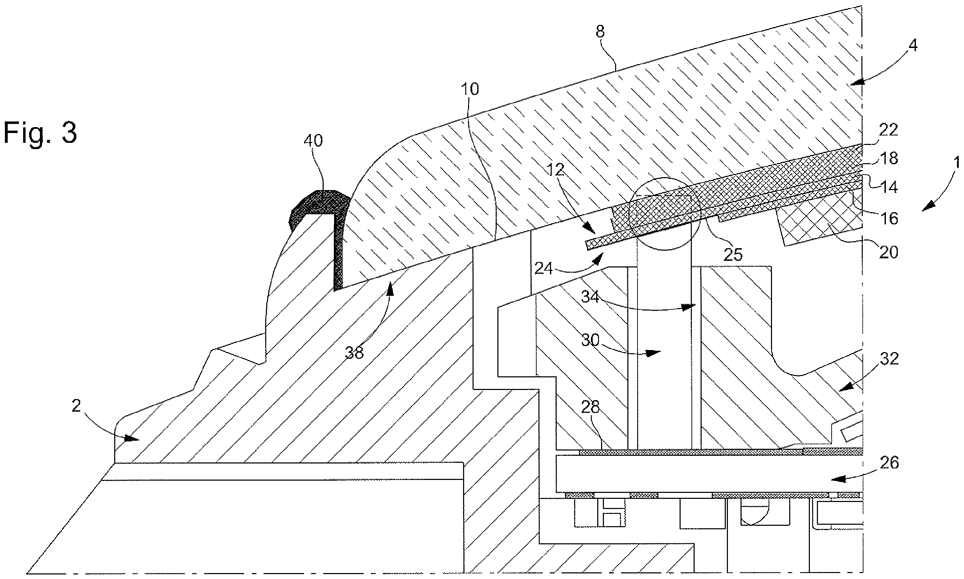

La figure 3 illustre un autre aspect qui ne fait pas partie de la présente invention. Sur cette figure, les éléments identiques à ceux déjà décrits en liaison avec les figures 1 et 2 seront désignés par les mêmes références numériques. On voit sur la figure 3 que la glace de montre 4 est en appui sur une portée 38 de la carrure 2 dont l'élévation ou hauteur par rapport à la carte de circuit imprimé 26 est telle que, lorsque la glace 4 est posée sur la portée 38, le connecteur zébra 30 est comprimé. En d'autres termes, le connecteur zébra 30 présente une hauteur qui est inférieure à sa hauteur à l'état complètement détendu, cette différence représentant le taux de compression du connecteur zébra requis par le fournisseur. Grâce à cette caractéristique, on garantit une connexion électrique fiable entre la cellule d'affichage à cristal liquide 12 et la carte de circuit imprimé 26. La glace de montre 4 est solidarisée sur la carrure 2 de la montre au moyen d'un trait de colle 40.

Il va de soi que la présente invention n'est pas limitée au mode de réalisation qui vient d'être décrit et que diverses modifications et variantes simples pourront être envisagées par l'homme du métier sans sortir du cadre de l'invention tel que défini par les revendications annexées. En particulier, dans le but de réduire au maximum les pertes, on peut, avant le soudage, effectuer un contrôle électrique du dispositif d'affichage en pressant la glace sur laquelle est fixé le dispositif d'affichage à cristal liquide en butée contre le directeur d'énergie de la carrure. De la sorte, le connecteur zébra se retrouve comprimé et assure la bonne connexion électrique entre le dispositif d'affichage et les composants de la carte à circuit imprimé, ce qui permet d'effectuer tous les tests nécessaires.

## Revendications

1. Montre comprenant une carrure (2) qui délimite avec une glace (4) une boîte de montre (1), la glace (4) comprenant une face supérieure (8) orientée du côté de l'utilisateur et une face inférieure (10) opposée orientée du côté de la boîte de montre (1), un dispositif d'affichage numérique (12) étant fixé sur la face inférieure (10) de la glace (4), une carte de circuit imprimé (26) étant disposée dans la boîte de montre (1), sous le dispositif d'affichage numérique (12) et à distance de celui-ci, le dispositif d'affichage numérique (12) étant connecté électriquement à la carte de circuit imprimé (26) au moyen d'un connecteur électrique de type zébra (30), la glace (4) étant en appui sur une portée (6) ménagée dans la carrure (2), la montre étant **caractérisée en ce que** la portée (6) est en saillie par rapport à la carrure (2) de sorte que, avant soudage par ultrasons de la glace (4) sur la carrure (2), la glace (4) n'est pas en contact dans sa position finale avec la carrure (2), la hauteur de la portée (6) par rapport à la carte de circuit imprimé (26) étant telle que, quand la portée (6) est consommée durant le soudage par ultrasons, le connecteur zébra (30) est comprimé entre le dispositif d'affichage numérique (12) et la carte de circuit imprimé (26).

2. Procédé de soudage par ultrasons d'une glace de montre (4), la montre comprenant une carrure (2) qui délimite avec la glace (4) une boîte de montre (1), la glace (4) comprenant une face supérieure (8) orientée du côté de l'utilisateur et une face inférieure (10) opposée orientée du côté de la boîte de montre (1), un dispositif d'affichage numérique (12) étant fixé sur la face inférieure (10) de la glace (4), une carte de circuit imprimé (26) étant disposée dans la boîte de montre (1), sous le dispositif d'affichage numérique (12) et à distance de celui-ci, le dispositif d'affichage numérique (12) étant connecté électriquement à la carte de circuit imprimé (26) au moyen d'un connecteur électrique de type zébra (30), ce procédé étant **caractérisé en ce que** :
- on place la glace (4) en appui sur une portée (6) ménagée dans la carrure (2), la portée (6) étant en saillie par rapport à la carrure (2) de sorte que, avant soudage par ultrasons de la glace (4) sur la carrure (2), la glace (4) n'est pas en contact dans sa position finale avec la carrure (2),
- on dirige les ultrasons sur la portée (6) pour faire fondre cette portée (6) et abaisser le niveau de la glace (4) en direction de la plaque à circuit imprimé (26), la hauteur de la portée (6) par rapport à la carte de circuit imprimé (26) étant telle que, quand la portée (6) est consommée durant le soudage par ultrasons, le connecteur zébra (30) est comprimé entre le dispositif d'affichage numérique (12) et la carte de circuit imprimé (26).

3. Procédé selon la revendication 2, **caractérisé en ce que**, avant l'étape de soudage par ultrasons, le connecteur zébra est à l'état détendu.

4. Procédé selon l'une quelconque des revendications 2 ou 3, **caractérisé en ce qu'**après l'étape de soudage par ultrasons, le connecteur zébra est à l'état comprimé, assurant une liaison électrique optimale.

## Patentansprüche

1. Tragbare Uhr mit einem Gehäusemittelteil (2), der zusammen mit einem Uhrenglas (4) ein Uhrengehäuse (1) begrenzt, wobei das Uhrenglas (4) eine dem Benutzer zugewandte Oberseite (8) und eine gegenüberliegende, dem Uhrengehäuse (1) zugewandte Unterseite (10) aufweist, eine digitale Anzeigevorrichtung (12) an der Unterseite (10) des Uhrenglases (4) befestigt ist, wobei eine Leiterplatte (26), die im Uhrengehäuse (1) unterhalb der digitalen Anzeigevorrichtung (12) und in einem Abstand davon angeordnet ist, und die digitale Anzeigevorrichtung (12) mit der Leiterplatte (26) mittels eines elektrischen ZEBRA-Steckers (30) elektrisch verbunden ist, wobei das Uhrenglas (4) auf einer im Gehäusemittelteil (2) vorgesehenen Auflagefläche (6) abgestützt ist, und die tragbare Uhr **dadurch gekennzeichnet ist, dass** die Auflagefläche (6) aus dem Gehäusemittelteil (2) hervorsteht, so dass das Uhrenglas (4) vor der Ultraschallverschweißung des Uhrenglases (4) mit dem Gehäusemittelteil (2) in seiner endgültigen Position nicht in Kontakt mit dem Gehäusemittelteil (2) ist, wobei die Höhe der Auflagefläche (6) relativ zur Leiterplatte (26) so ist, dass der ZEBRA-Stecker (30), wenn die Auflagefläche (6) während des Ultraschallschweißens verbraucht wird, zwischen der digitalen Anzeigevorrichtung (12) und der Leiterplatte (26) zusammengedrückt wird.

2. Verfahren zum Ultraschallschweißen eines Glases (4) einer tragbaren Uhr, wobei die tragbare Uhr einen Gehäusemittelteil (2) aufweist, der zusammen mit dem Uhrenglas (4) ein Uhrengehäuse (1) begrenzt, wobei das Uhrenglas (4) eine dem Benutzer zugewandte Oberseite (8) und eine gegenüberliegende, dem Uhrengehäuse (1) zugewandte Unterseite (10) aufweist, eine digitale Anzeigevorrichtung (12) an der Unterseite (10) des Uhrenglases (4) befestigt ist, eine Leiterplatte (26) im Uhrengehäuse (1) unterhalb der digitalen Anzeigevorrichtung (12) und in einem Abstand von dieser angeordnet ist, und die digitale Anzeigevorrichtung (12) mit der Leiterplatte (26) mittels eines elektrischen ZEBRA-Steckers (30) elektrisch verbunden ist, wobei dieses Verfahren **dadurch gekennzeichnet ist, dass**:
- das Uhrenglas (4) mit einer im Gehäusemittelteil (2) vorgesehenen Auflagefläche (6) in Kontakt gebracht wird, wobei die Auflagefläche (6) aus dem Gehäusemittelteil (2) hervorsteht, so dass das Uhrenglas (4) vor der Ultraschallverschweißung des Uhrenglases (4) mit dem Gehäusemittelteil (2) in seiner endgültigen Position nicht in Kontakt mit dem Gehäusemittelteil (2) ist,
- Ultraschall auf die Auflagefläche (6) gerichtet wird, um die Auflagefläche (6) zu schmelzen und das Niveau des Uhrenglases (4) in Richtung der Leiterplatte (26) zu senken, wobei die Höhe der Auflagefläche (6) relativ zur Leiterplatte (26) so ist, dass der ZEBRA-Stecker (30), wenn die Auflagefläche (6) während des Ultraschallschweißens verbraucht wird, zwischen der digitalen Anzeigevorrichtung (12) und der Leiterplatte (26) zusammengedrückt wird.

3. Verfahren nach Anspruch 2, **dadurch gekennzeichnet, dass** sich der ZEBRA-Stecker vor dem Ultraschallschweißschritt im spannungslosen Zustand befindet.

4. Verfahren nach einem der Ansprüche 2 oder 3, **dadurch gekennzeichnet, dass** sich der ZEBRA-Stecker nach dem Ultraschallschweißschritt in einem komprimierten Zustand befindet, wodurch eine optimale elektrische Verbindung hergestellt wird.

## Claims

1. Watch comprising a middle part (2) which, with a crystal (4), delimits a watch case (1), the crystal (4) comprising a top face (8) oriented towards the user and an opposite bottom face (10) oriented towards the watch case (1), a digital display device (12) being fixed to the bottom face (10) of the crystal (4), a printed circuit board (26) being disposed inside the watch case (1), underneath and remote from the digital display device (12), the digital display device (12) being electrically connected to the printed circuit board (26) by means of a zebra-type electrical connector (30), the crystal (4) abutting on a shoulder (6) arranged in the middle part (2), the watch being **characterised in that** the shoulder (6) protrudes from the middle part (2) so that, before ultrasonic welding of the crystal (4) on the middle part (2), the crystal (4) is not in contact in its final position with the crystal (2), the height of the shoulder (6) with respect to the printed circuit board (26) being so that, when the shoulder (6) is consumed during the ultrasonic welding, the zebra connector (30) is compressed between the digital display device (12) and the printed circuit board (26).

2. Method of ultrasonic welding a watch crystal (4), wherein the watch comprises a middle part (2) which, with the crystal (4), delimits a watch case (1), the crystal (4) comprising a top face (8) oriented towards the user and an opposite bottom face (10) oriented towards the watch case (1), a digital display device (12) being fixed to the bottom face (10) of the crystal (4), a printed circuit board (26) being disposed inside the watch case (1), underneath and remote from the digital display device (12), the digital display device (12) being electrically connected to the printed circuit board (26) by means of a zebra-type electrical connector (30), the method being **characterized in that** it comprises the steps of:
- placing the crystal (4) in abutment on a shoulder (6) arranged in the middle part (2), the shoulder (6) protruding from the middle part (2) so that, before ultrasonic welding of the crystal (4) on the middle part (2), the crystal (4) is not in contact in its final position with the crystal (2),
- directing the ultrasonic vibrations onto the shoulder (6) to melt said shoulder (6) and to lower the level of the crystal (4) in the direction of the printed circuit board (26), the height of the shoulder (6) with respect to the printed circuit board (26) being so that, when the shoulder (6) is consumed during the ultrasonic welding, the zebra connector (30) is compressed between the digital display device (12) and the printed circuit board (26).

3. Method according to claim 2, **characterized in that**, prior to the ultrasonic welding step, the zebra connector is in a non-stressed state.

4. Method according to any of claims 2 or 3, **characterized in that**, after the ultrasonic welding step, the zebra connector is in a compressed state, providing an optimum electrical connection.
